# EUROPEAN PATENT APPLICATION

(11) **EP 4 435 906 A1**
(43) Date of publication of application: **25.09.2024**
(21) Application number: 22916063.5
(22) Date of filing: 26.12.2022
(51) Int. Cl.: H01M 8/0271, C25B 9/65, C25B 9/77, C25B 13/02, H01M 8/04, H01M 8/12, H01M 8/243, H01M 8/2465, H01M 8/2475, H01M 8/2484

(54) **ELECTROCHEMICAL CELL DEVICE, MODULE AND MODULE HOUSING**

(30) Priority: 28.12.2021 JP 2021215314; 28.02.2022 JP 2022029980
(71) Applicant: Kyocera Corporation, Kyoto-shi, Kyoto 612-8501 (JP)
(72) Inventor: FURUUCHI, Fumito, Kyoto-shi, Kyoto 612-8501 (JP)
(74) Representative: Viering, Jentschura & Partner mbB Patent- und Rechtsanwälte
(86) International application number: PCT/JP2022/048048
(87) International publication number: WO 2023/127840

(57) **Abstract**

An electrochemical cell device includes a cell stack, a support body, and a fixing member. The cell stack includes a plurality of cells each having a pair of main surfaces along a first direction and a second direction, and a side surface connecting the pair of main surfaces, the plurality of cells being aligned along a third direction. The support body supports one end portion of the plurality of cells in the first direction along the third direction. The fixing member is located between the cell stack and the support body. The plurality of cells include a first cell located on one end side in the third direction, a second cell located on the other end side in the third direction, and a third cell located between the first cell and the second cell. The side surfaces of the first to third cells each include a contact area that is in contact with the fixing member. A maximum length in the first direction of the contact area in the first cell or the second cell is different from a maximum length in the first direction of the contact area in the third cell.

## Description

### TECHNICAL FIELD

The present disclosure relates to an electrochemical cell device, a module, and a module housing device.

### BACKGROUND OF INVENTION

In recent years, various fuel cell stack devices each including a plurality of fuel cells have been proposed, as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: JP 2015-35417 A

### SUMMARY

In an aspect of an embodiment, an electrochemical cell device includes a cell stack, a support body, and a fixing member. The cell stack includes a plurality of cells each having a pair of main surfaces along a first direction and a second direction intersecting the first direction, and a side surface connecting the pair of main surfaces, the plurality of cells being aligned along a third direction intersecting the first direction and the second direction. The support body supports one end portion in the first direction of the plurality of cells along the third direction. The fixing member is located between the cell stack and the support body. The plurality of cells include a first cell located on one end side in the third direction, a second cell located on the other end side of the third direction, and a third cell located between the first cell and the second cell. The side surfaces of the first to third cells each include a contact area that is in contact with the fixing member and a non-contact area that is not in contact with the fixing member. A maximum length in the first direction of the contact area in the first cell and/or the second cell is different from a maximum length in the first direction of the contact area in the third cell.

In an aspect of the embodiment, an electrochemical cell device includes a cell stack, a support body, a fixing member, and an electrode terminal. The cell stack includes a plurality of cells each having a pair of main surfaces along a first direction and a second direction intersecting the first direction, and a side surface connecting the pair of main surfaces, the plurality of cells being aligned along a third direction intersecting the first direction and the second direction. The support body supports one end portion in the first direction of the plurality of cells along the third direction. The fixing member is located between the cell stack and the support body. The electrode terminal is drawable externally from the cell stack. The plurality of cells include a first cell and a second cell located closer to the electrode terminal than the first cell is. The side surfaces of the first and second cells each include a contact area that is in contact with the fixing member and a non-contact area that is not in contact with the fixing member. A second length that is a maximum length in the first direction of the contact area in the second cell is greater than a first length that is a maximum length in the first direction of the contact area in the first cell.

In an aspect of the embodiment, an electrochemical cell device includes a cell stack, an end current collection member, a support body, a fixing member, and an electrode terminal. The cell stack includes a plurality of cells each having a pair of main surfaces along a first direction and a second direction intersecting the first direction, and a side surface connecting the pair of main surfaces, the plurality of cells being aligned along a third direction intersecting the first direction and the second direction. The end current collection member is located at an end of the cell stack in the third direction. The end current collection member has a second surface facing the cell stack and a first surface opposite to the second surface. The support body supports one end portion in the first direction of the plurality of cells and one end portion in the first direction of the end current collection member along the third direction. The fixing member is located between the cell stack and the end current collection member, and the support body. The electrode terminal is drawable externally from the cell stack. The plurality of cells include a first cell. The side surface of the first cell and the first surface of the end current collection member each include a contact area that is in contact with the fixing member and a non-contact area that is not in contact with the fixing member. A third length that is a maximum length in the first direction of a contact region in the end current collection member is greater than a first length that is a maximum length in the first direction of the contact area in the first cell.

A module of the present disclosure includes the electrochemical cell device described above and a storage container housing the electrochemical cell device.

A module housing device of the present disclosure includes the module described above, an auxiliary device configured to operate the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 2A is a perspective view illustrating an example of an electrochemical cell device according to the first embodiment.
FIG. 2B is a cross-sectional view taken along a line X-X illustrated in FIG. 2A.
FIG. 2C is a top view illustrating an example of the electrochemical cell device according to the first embodiment.
FIG. 3 is an enlarged view of a contact area between the side surfaces of electrochemical cells and a fixing member in the electrochemical cell device according to the first embodiment.
FIG. 4A is a top view of an example of an electrochemical cell device according to a second embodiment.
FIG. 4B is a cross-sectional view taken along a line Y-Y illustrated in FIG. 4A.
FIG. 5 is an enlarged view of part of the electrochemical cell device illustrated in FIG. 4B.
FIG. 6 is a cross-sectional view illustrating an example of an electrochemical cell device according to a third embodiment.
FIG. 7 is an enlarged view of the contact area between the side surfaces of the electrochemical cells and the fixing member in the electrochemical cell device according to the third embodiment.
FIG. 8 is an exterior perspective view illustrating an example of a module according to an embodiment.
FIG. 9 is an exploded perspective view schematically illustrating an example of a module housing device according to an embodiment.

### DESCRIPTION OF EMBODIMENTS

A fuel cell stack device includes, for example, a support body that supports a plurality of fuel cells. In such a structure, there is room for improvement in the durability of a bonding portion between the support body and the fuel cell.

Therefore, it is desired to provide an electrochemical cell device, a module, and a module housing device with a high durability.

Embodiments of an electrochemical cell device, a module, and a module housing device disclosed in the present application will be described below in detail with reference to the accompanying drawings. Note that the disclosure is not limited by the following embodiments.

Note that the drawings are schematic and that the dimensional relationships between elements, the proportions of the elements, and the like may differ from the actual ones. Further, there may be differences between the drawings in the dimensional relationships, proportions, and the like.

### First Embodiment

### Configuration of Electrochemical Cell

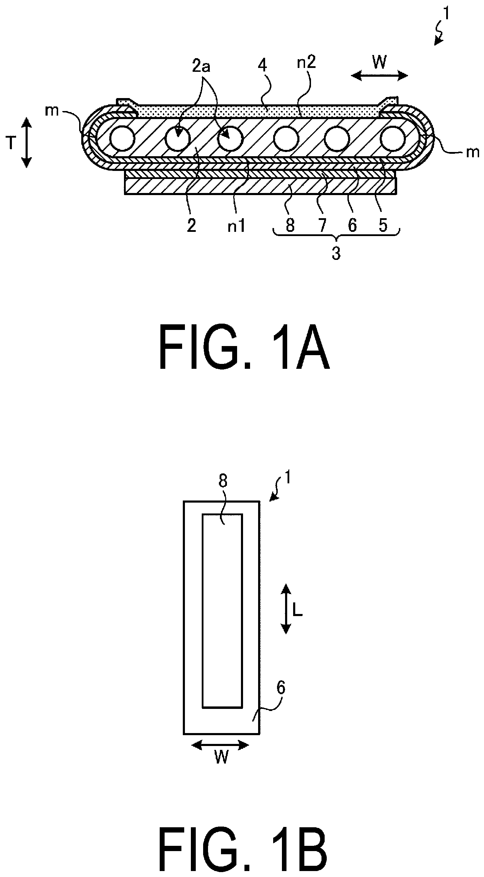

First, with reference to FIGs. 1A to 1C, an example of a solid oxide fuel cell will be described as an electrochemical cell according to a first embodiment. The electrochemical cell device may include a cell stack including a plurality of the electrochemical cells. The electrochemical cell device including the plurality of electrochemical cells is simply referred to as a cell stack device.

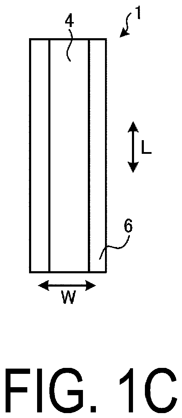

FIG. 1A is a horizontal cross-sectional view illustrating an example of an electrochemical cell according to the first embodiment, FIG. 1B is a side view of an example of the electrochemical cell according to the first embodiment when viewed from an air electrode side, and FIG. 1C is a side view of an example of the electrochemical cell 1 according to the first embodiment when viewed from an interconnector side. Note that FIGs. 1A to 1C each illustrate an enlarged view of a part of a respective one of configurations of the electrochemical cell. Hereinafter, the electrochemical cell may be simply referred to as a cell.

In the example illustrated in FIGs. 1A to 1C, the cell 1 is hollow flat plate-shaped, and has an elongated plate shape. As illustrated in FIG. 1B, the shape of the entire cell 1 when viewed from the side is a rectangle having a side length of, for example, 5 cm to 50 cm in a length direction L and a length of, for example, 1 cm to 10 cm in a width direction W orthogonal to the length direction L. The thickness of the entire cell 1 in a thickness direction T is, for example, 1 mm to 5 mm. The length direction L is an example of a first direction. The width direction W is an example of a second direction intersecting the first direction. The thickness direction T is an example of a third direction intersecting the first direction and the second direction.

As illustrated in FIG. 1A, the cell 1 includes a support substrate 2 with electrical conductivity, an element portion 3, and an interconnector 4. The support substrate 2 has a pillar shape with a pair of first and second surfaces n1, n2 which face each other, and a pair of arc-shaped side surfaces m connecting the first surface n1 and the second surface n2.

The element portion 3 is located on the first surface n1 of the support substrate 2. The element portion 3 includes a fuel electrode 5, a solid electrolyte layer 6, and an air electrode 8. In the example illustrated in FIG. 1A, the interconnector 4 is located on the second surface n2 of the cell 1. Note that the cell 1 may include an intermediate layer 7 between the solid electrolyte layer 6 and the air electrode 8.

As illustrated in FIG. 1B, the air electrode 8 does not extend to the lower end of the cell 1. At the lower end portion of the cell 1, only the solid electrolyte layer 6 is exposed on a surface of the first surface n1. As illustrated in FIG. 1C, the interconnector 4 may extend to the lower end of the cell 1. At a lower end portion of the cell 1, the interconnector 4 and the solid electrolyte layer 6 are exposed on the surface. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of constituent members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability, and allows the gas flowing in the gas-flow passage 2a to permeate to the fuel electrode 5. The support substrate 2 may have electrical conductivity. The support substrate 2 having electrical conductivity collects electricity generated in the element portion 3 to the interconnector 4.

The material of the support substrate 2 includes, for example, an iron group metal component and an inorganic oxide. For example, the iron group metal component may be Ni (nickel) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode 5, a commonly known material may be used. As the fuel electrode 5, any of porous electrically conductive ceramics, for example, ceramics containing: ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is contained as a solid solution may be referred to as stabilized zirconia. Stabilized zirconia may include partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which from 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 8 has gas permeability. The open porosity of the air electrode 8 may be, for example, in the range from 20% to 50%, particularly in the range from 30% to 50%. The open porosity of the air electrode 8 may also be referred to as the porosity of the air electrode 8.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion prevention layer. When strontium (Sr) contained in the air electrode 8 diffuses into the solid electrolyte layer 6, a resistance layer of SrZrOs is formed in the solid electrolyte layer 6. The intermediate layer 7 makes it difficult for Sr to diffuse, thereby making it difficult for SrZrOs to be formed.

The material of the intermediate layer 7 is not particularly limited as long as it generally helps prevent diffusion of elements between the air electrode 8 and the solid electrolyte layer 6. The material of the intermediate layer 7 may contain, for example, CeO₂ (cerium oxide) in which rare earth elements other than Ce (cerium) are in solid solution. As such rare earth elements, for example, Gd (gadolinium), Sm (samarium), or the like may be used.

The interconnector 4 is dense, and makes the leakage of the fuel gas flowing through the gas-flow passages 2a located inside the support substrate 2, and of the oxygen-containing gas flowing outside the support substrate 2 less likely to occur. The interconnector 4 may have a relative density of 93% or more; particularly 95% or more.

As the material of the interconnector 4, a lanthanum chromite-based perovskite-type oxide (LaCrO₃-based oxide), a lanthanum strontium titanium-based perovskite-type oxide (LaSrTiO₃-based oxide), or the like may be used. These materials have electrical conductivity, and are unlikely to be reduced and also unlikely to be oxidized even when brought into contact with a fuel gas such as a hydrogen-containing gas and an oxygen-containing gas such as air.

### Configuration of Electrochemical Cell Device

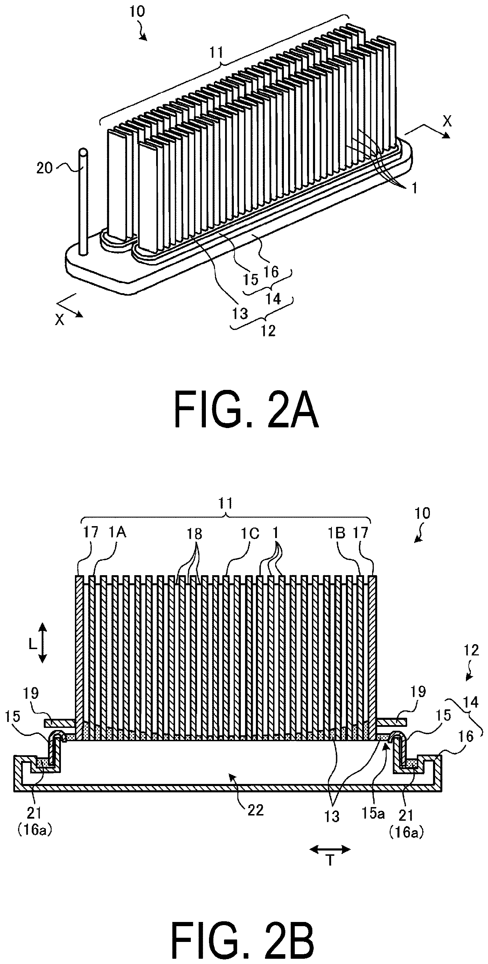

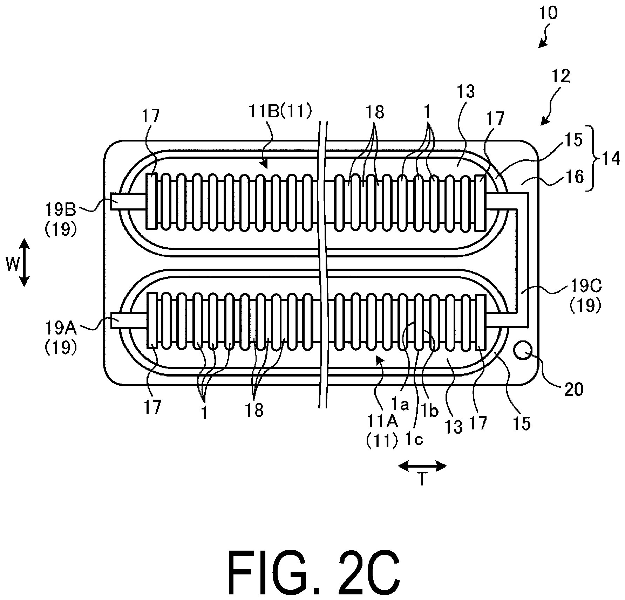

An electrochemical cell device according to the present embodiment using the cell 1 described above will be described with reference to FIGs. 2A to 2C. FIG. 2A is a perspective view illustrating an example of the electrochemical cell device according to the first embodiment, FIG. 2B is a cross-sectional view taken along a line X-X illustrated in FIG. 2A, and FIG. 2C is a top view illustrating an example of the electrochemical cell device according to the first embodiment.

As illustrated in FIG. 2A, a cell stack device 10 includes a cell stack 11 including a plurality of the cells 1 arrayed (stacked) in the thickness direction T (see FIG. 1A) of each cell 1, and a fixing member 12.

The fixing member 12 includes a fixing member 13 and a support member 14. The support member 14 supports the cells 1. The fixing member 13 fixes the cells 1 to the support member 14. The support member 14 includes a support body 15 and a gas tank 16. The support body 15 and the gas tank 16, constituting the support member 14, are made of a metal and electrically conductive.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing member 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding member 21, with which the recessed groove 16a of the gas tank 16 is filled.

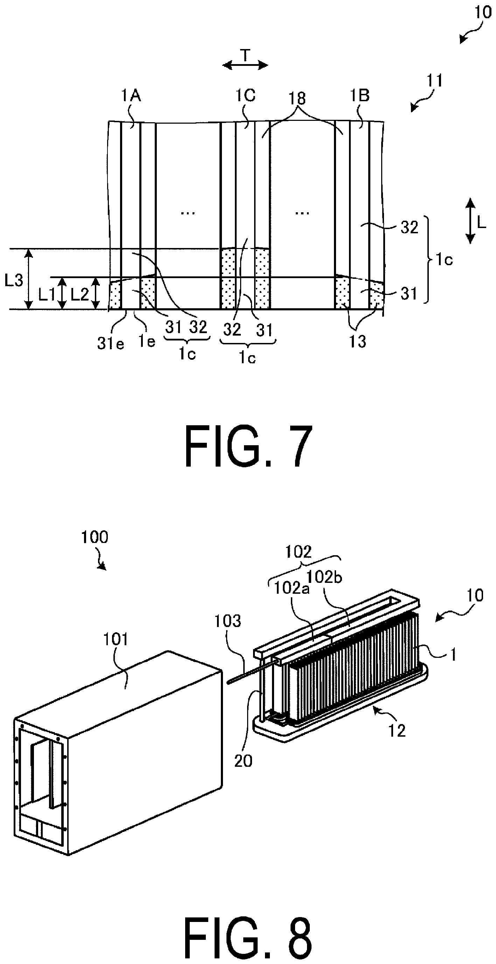

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas supplied to the gas tank 16 is produced in a reformer 102 (see FIG. 8) which will be described later.

A hydrogen-rich fuel gas can be produced, for example, by steam-reforming a raw fuel. When the fuel gas is produced by steam-reforming, the fuel gas contains steam.

The example illustrated in FIG. 2A includes two rows of cell stacks 11, two support bodies 15, and the gas tank 16. The two rows of the cell stacks 11 each have a plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15.

The insertion hole 15a has, for example, an oval shape in a top surface view. The length of the insertion hole 15a in an arrangement direction of the cells 1, that is, the thickness direction T, may be longer than the distance between two end current collection members 17 located at both ends of the cell stack 11, for example. The width of the insertion hole 15a may be, for example, greater than the length of the cell 1 in the width direction W (see FIG. 1A).

As illustrated in FIG. 2B, the joined portions between the inner wall of the insertion hole 15a and the lower end portions of the cells 1 are filled with the fixing member 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing member 13 and the bonding member 21 may be of low electrical conductivity, such as glass. As the specific materials of the fixing member 13 and the bonding member 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series the fuel electrode 5 of one of the adjacent ones of the cells 1 with the air electrode 8 of the other one of the adjacent ones of the cells 1. More specifically, the electrically conductive member 18 electrically connects the interconnector 4 electrically connected to the fuel electrode 5 of the one of the adjacent cells 1 and the air electrode 8 of the other one of the adjacent cells 1. The electrically conductive members 18 may be in contact with the fixing member 13 or may not be in contact therewith.

As illustrated in FIG. 2B, the end current collection members 17 are electrically connected to the first cell 1A and the second cell 1B, respectively, which are the outermost cells in the arrangement direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The connection terminal 19C electrically connects the end current collection member 17 on the negative electrode side in the cell stack 11A and the end current collection member 17 on the positive electrode side in the cell stack 11B.

As illustrated in FIG. 2C, the cell 1 has a first surface 1a and a second surface 1b, which constitute a pair of main surfaces along the width direction W, and a side surface 1c connecting the pair of main surfaces. The fixing member 13 is located between the side surface 1c and the support body 15. For example, the air electrode 8 of the element portion 3 or the interconnector 4 is located on the pair of main surfaces. For example, the solid electrolyte layer 6 is located on the side surface 1c.

### Bonding Between Support Body and Cell

Next, bonding between the support body 15 and the cells 1 will be described with reference to FIGs. 2B to 3.

In the cell stack device 10 illustrated in FIG. 2B, a contact length with the cells 1 along the length direction L of the fixing member 13 that fixes the plurality of cells 1 aligned in the thickness direction T varies with the distance from the end current collection members 17. Specifically, the fixing member 13 is located such that the contact length with the cells 1 along the length direction L decreases as the distance from the end current collection members 17 increases.

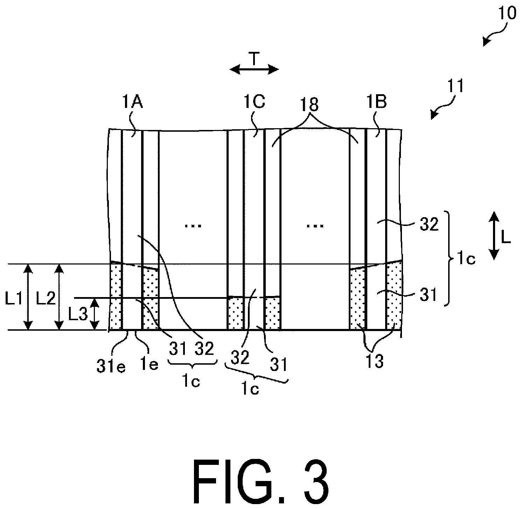

FIG. 3 is an enlarged view of the contact area between the side surfaces of the electrochemical cells and the fixing member in the electrochemical cell device according to the first embodiment. With reference to FIG. 3, the fixing member 13 that is in contact with the side surfaces 1c of first to third cells 1A to 1C of the plurality of cells 1 aligned in the thickness direction T which is the arrangement direction of the cells 1 is described.

The first cell 1A is located at an end portion on one end side of the cell stack 11. The second cell 1B is located at an end portion on the other end side of the cell stack 11. The third cell 1C is located between the first cell 1A and the second cell 1B, that is, at the center portion of the cell stack 11.

As illustrated in FIG. 3, the fixing member 13 is located on a first end 1e side, which is the lower end in the length direction L of each cell 1, and the support body 15 (see FIG. 2B) supports one end portion including the first end 1e of each cell 1. Note that, in FIG. 3, the shape and structure of the cell 1 is illustrated in a simplified form.

As illustrated in FIG. 3, the fixing member 13 is located so as to be in contact with the side surfaces 1c of the first to third cells 1A to 1C. Each side surface 1c includes a contact area 31 that is in contact with the fixing member 13 and a non-contact area 32 that is not in contact with the fixing member 13. The contact area 31 has a second end 31e on the first end 1e side. The second end 31e coincides with the first end 1e in FIG. 3, but need not coincide therewith.

The cells 1 constituting the cell stack device 10 may receive external forces in the thickness direction T. In such cases, the fixing member 13 that fixes the cells 1 may crack due to stress concentration caused by the external force applied to the cells 1, and the durability of the cell stack device 10 may deteriorate.

Therefore, in the present embodiment, the thickness of the fixing member 13 that is in contact with each of the side surfaces 1c of the cells 1 is changed according to the ease of concentration of stress to enable dispersion of the stress generated in the fixing member 13. In the present embodiment, the maximum length of the contact area 31 in the length direction L in the first cell 1A or the second cell 1B is different from the maximum length of the contact area 31 in the length direction L in the third cell 1C.

For example, in the cell stack device 10 including the first to third cells 1A to 1C aligned in the thickness direction T, the first cell 1A and the second cell 1B are more likely to receive the external force in the thickness direction T than the third cell 1C. The maximum length in the length direction L of the contact area 31 on the side surface 1c of the first cell 1A is defined as a length L1, the maximum length of the contact area 31 in the length direction L on the side surface 1c of the second cell 1B is defined as a length L2, and the maximum length of the contact area 31 in the length direction L on the side surface 1c of the third cell 1C is defined as a length L3. In the cell stack 11, the length L1 of the first cell 1A and/or the length L2 of the second cell 1B, which are likely to receive an external force in the thickness direction T, is made to be greater than the length L3 of the third cell 1C, which is less likely to receive an external force in the thickness direction T, whereby the stress received by the fixing member 13 can be dispersed. This decreases the likelihood of occurrence of cracks in the fixing member 13 that fixes the side surfaces 1c of the first to third cells 1A to 1C and increases the durability of the fixing member 13, which in turn increases the durability of the cell stack device 10.

Here, the maximum length in the length direction L of the contact area 31 in the cell 1 refers to the maximum length among the lengths in the length direction L from the second end 31e to the non-contact area 32 in the side surface 1c.

### Second Embodiment

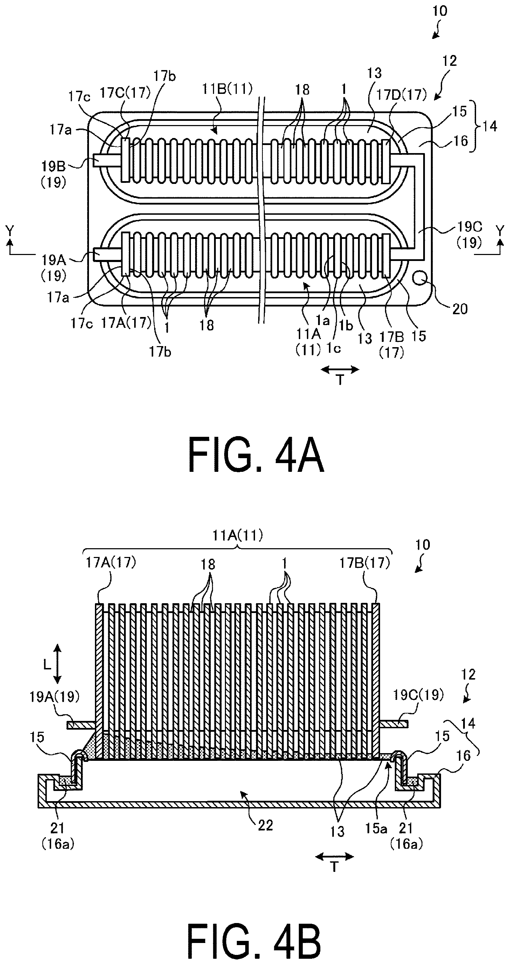

An electrochemical cell device according to a second embodiment will be described with reference to FIGs. 4A and 4B. FIG. 4A is a top view of an example of an electrochemical cell device according to a second embodiment, and FIG. 4B is a cross-sectional view taken along a line Y-Y illustrated in FIG. 4A.

As illustrated in FIG. 4A, an end current collection member 17A and an end current collection member 17C, each having a first surface 17a, a second surface 17b, and a third surface 17c, are located on the outer side in the arrangement direction of the cell stack 11. The first surface 17a is located on the positive electrode terminal 19A side or the negative electrode terminal 19B side. The second surface 17b is located on a side opposite to the first surface 17a and faces the cell stack 11. The third surface 17c is a surface connecting the first surface 17a and the second surface 17b.

In the cell stack device 10 illustrated in FIG. 4B, the contact length with the cells 1 along the length direction L of the fixing member 13 that fixes the plurality of cells 1 aligned in the thickness direction T varies in accordance with the distance from the electrode terminal. More specifically, the fixing member 13 is located such that the contact length with the cells 1 along the length direction L decreases as the distance from the end current collection member 17A connected to the positive electrode terminal 19A increases.

In the cell stack device 10 illustrated in FIG. 4B, the fixing member 13 is also located between the first surface 17a of the end current collection members 17A and 17C and the support body 15. The end current collection members 17A and 17C need not be in contact with the fixing member 13. When the end current collection members 17A and 17C are in contact with the fixing member 13, the fixing member 13 may have a contact length with the end current collection members 17A and 17C along the length direction L greater than the contact lengths with the cells 1.

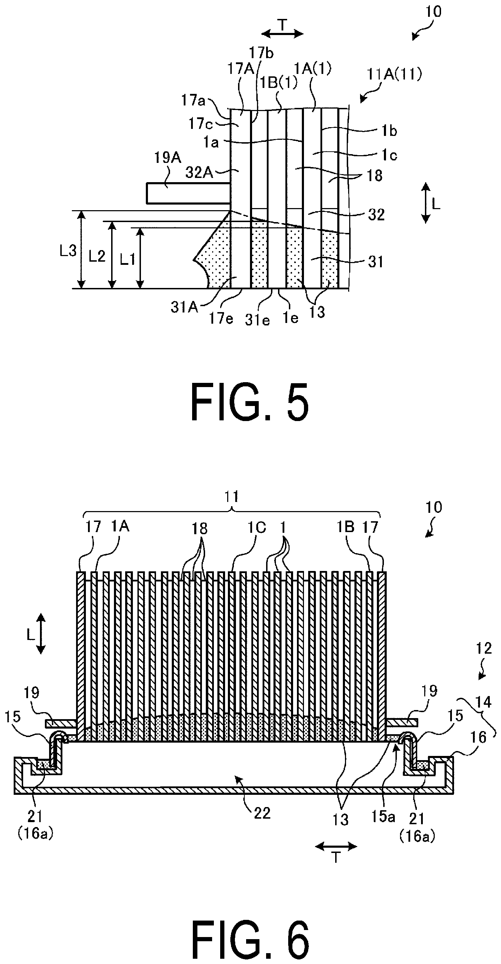

FIG. 5 is an enlarged view of part of the electrochemical cell device illustrated in FIG. 4B. FIG. 5 describes the fixing member 13 that contacts the side surfaces 1c of the first cell 1A and the second cell 1B in the plurality of cells 1 aligned in the thickness direction T, that is, the arrangement direction of the cells 1, and the first surface 17a of the end current collection member 17A to which the positive electrode terminal 19A is connected.

The second cell 1B is located at an end portion on one end side of the cell stack 11. The second cell 1B is coupled to the positive electrode terminal 19A via the end current collection member 17A. The first cell 1A is located farther away from the end current collection member 17A than the second cell 1B is.

As illustrated in FIG. 5, the fixing member 13 is located on the first end 1e side, which is the lower end in the length direction L of each cell 1, and the support body 15 (see FIG. 4B) supports one end portion including the first end 1e of each cell 1. Note that, in FIG. 5, the shape and structure of the cells 1 are illustrated in simplified form. In FIG. 5, the support body 15 is not illustrated.

As illustrated in FIG. 5, the fixing member 13 is located so as to be in contact with the side surfaces 1c of the first cell 1A and the second cell 1B. The side surface 1c includes the contact area 31 that is in contact with the fixing member 13 and the non-contact area 32 that is not in contact with the fixing member 13. The contact area 31 has a second end 31e on the first end 1e side. In FIG. 5, the second end 31e coincides with the first end 1e, but need not coincide therewith.

The fixing member 13 is located so as to be in contact with the end current collection member 17A. The end current collection member 17A includes a contact area 31A that is in contact with the fixing member 13 and a non-contact area 32A that is not in contact with the fixing member 13. The contact area 31A has a second end on the first end 17e side. The second end need not coincide with the first end 17e.

The cell stack 11 constituting the cell stack device 10 may receive external forces in the thickness direction T via an external device connected to the positive electrode terminal 19A and/or the negative electrode terminal 19B. In such cases, the fixing member 13 that fixes the plurality of cells 1 of the cell stack 11 may crack due to stress concentration caused by an external force applied to the cells 1, and the durability of the cell stack device 10 may deteriorate. Such concentration of stress tends to be marked particularly in the vicinity of the cells 1 close to the positive electrode terminal 19A and/or the negative electrode terminal 19B, and in the vicinity of the end current collection member 17A and/or the end current collection member 17C.

Therefore, in the present embodiment, the thickness of the fixing member 13 that is in contact with the side surface 1c of the cell 1 is changed according to the ease of concentration of the stress to enable dispersion of the stress generated in the fixing member 13. In the present embodiment, a maximum length in the length direction L of the contact area 31 in the second cell 1B is greater than a maximum length in the length direction L of the contact area 31 in the first cell 1A. Alternatively, the maximum length in the length direction L of the contact area in the end current collection member 17A is greater than the maximum length in the length direction L of the contact area 31 in the first cell 1A and/or the second cell 1B.

For example, the second cell 1B of the cell stack 11A is more likely to receive the external force in the thickness direction T via the positive electrode terminal 19A than the first cell 1A. The maximum length in the length direction L of the contact area 31 on the side surface 1c of the first cell 1A is defined as the length L1, and the maximum length in the length direction L of the contact area 31 on the side surface 1c of the second cell 1B is defined as the length L2. In the cell stack 11A, the length L2 of the second cell 1B closer to the positive electrode terminal 19A is made to be greater than the length L1 of the first cell 1A located away from the positive electrode terminal 19A to enable dispersion of the stress received by the fixing member 13. This decreases the likelihood of occurrence of cracks in the fixing member 13 that fixes the side surfaces 1c of the cells 1 including the first cell 1A and the second cell 1B and increases the durability of the fixing member 13, which in turn increases the durability of the cell stack device 10.

When the end current collection member 17 is in contact with the fixing member 13, the end current collection member 17A is more likely to receive the external force in the thickness direction T via the positive electrode terminal 19A than the first cell 1A and even the second cell 1B. Therefore, the length L3, which is the maximum length in the length direction L of the contact area 31A of the end current collection member 17A, is made to be greater than the length L1 of the first cell 1A and even the length L2 of the second cell 1B to enable dispersion of the stress received by the fixing member 13. This decreases the likelihood of occurrence of cracks in the fixing member 13 that fixes the second surface 17b of the end current collection member 17A and increases the durability of the fixing member 13, which in turn increases the durability of the cell stack device 10.

Here, the maximum length in the length direction L of the contact area 31 in the cell 1 refers to the maximum length among the lengths in the length direction L from the second end 31e to the non-contact area 32 on the side surface 1c. The maximum length in the length direction L of the contact area 31A in the end current collection member 17 refers to the maximum length among the lengths in the length direction L from the second end to the non-contact area 32A of the first surface 17a.

Note that, instead of the maximum length on the side surface 1c of the cell 1, the average length in the length direction L of regions where the pair of main surfaces (the first surface 1a and the second surface 1b) and the side surface 1c of the cell 1 are in contact with the fixing member 13 may be used for comparison. Instead of the maximum length in the end current collection member 17, the average length in the length direction L of areas where the first surface 17a, the second surface 17b, and the third surface 17c are in contact with the fixing member 13 may be used for comparison.

Note that, as illustrated in FIG. 5, when the cells 1 including the first cell 1A and the second cell 1B are viewed in cross section, the length in the length direction L of the area where the first surface 1a is in contact with fixing member 13 may be greater than the length in the length direction L of the area where the second surface 1b is in contact with fixing member 13. This further decreases the likelihood of occurrence of cracks in the fixing member 13 that fixes the side surfaces 1c of the cells 1 and increases the durability of the fixing member 13, which in turn increases the durability of the cell stack device 10.

Although not illustrated in the drawings, the thickness of the fixing member 13 that is in contact with the side surface 1c of each cell 1 can also be changed according to the ease of concentration of stress in the cell stack 11B connected to the negative electrode terminal 19B to enable dispersion of the stress generated in the fixing member 13. In the present embodiment, the maximum length in the length direction L of the contact area 31 in the cell 1 located close to the negative electrode terminal 19B can be made to be greater than the maximum length in the length direction L of the contact area 31 in the cell 1 located away from the negative electrode terminal 19B. This decreases the likelihood of occurrence of cracks in the fixing member 13 that fixes the side surfaces 1c of the cells 1 of the cell stack 11B and increases the durability of the fixing member 13, which in turn increases the durability of the cell stack device 10.

### Third Embodiment

FIG. 6 is a cross-sectional view illustrating an example of an electrochemical cell device according to a third embodiment. FIG. 7 is an enlarged view of the contact area between the side surfaces of the electrochemical cells and the fixing member in the electrochemical cell device according to the third embodiment.

As illustrated in FIG. 6, the cell stack device 10 according to the present embodiment is located such that the contact length of the fixing member 13 with the cells 1 along the length direction L increases as the distance from the end current collection member 17 increases. That is, as illustrated in FIG. 7, the cell stack device 10 according to the present embodiment differs from the cell stack device 10 according to the first embodiment in that the maximum length of the fixing member 13 along the length direction L that is in contact with the side surfaces 1c of the plurality of cells 1 aligned in the thickness direction T increases with the distance from the end current collection member 17.

The cell stack device 10 may experience random vibrations as it is driven. In such random vibrations, forces act on the support body 15 and/or the gas tank 16 to create torsion. At this time, the fixing member 13 located close to the third cell 1C is more likely to be distorted and cracked than the fixing member 13 located close to the first cell 1A and the second cell 1B located at the end portions in the thickness direction T.

Here, a maximum length in the length direction L of the contact area 31 in the side surface 1c of the first cell 1A is defined as a length L1, a maximum length in the length direction L of the contact area 31 in the side surface 1c of the second cell 1B is defined as a length L2, and a maximum length in the length direction L of the contact area 31 in the side surface 1c of the third cell 1C is defined as a length L3. The length L3 of the third cell 1C of the cell stack 11, which is more likely to be cracked due to random vibrations, can be made to be greater than the length L1 of the first cell 1A and/or the length L2 of the second cell 1B to enable reduced distortion of the support body 15 and/or the gas tank 16. This decreases the likelihood of occurrence of cracks in the fixing member 13 that fixes the side surfaces 1c of the first to third cells 1A to 1C and increases the durability of the fixing member 13, which in turn increases the durability of the cell stack device 10.

### Module

A module 100 according to the embodiment of the present disclosure will be described using the cell stack device 10 described above with reference to FIG. 8. FIG. 8 is an exterior perspective view illustrating the module according to the embodiment. FIG. 8 illustrates a state in which the front and rear surfaces, which constitute part of a storage container 101, are removed, and the fuel cell stack device 10 of the fuel cell stored inside is taken out rearward.

As illustrated in FIG. 8, the module 100 includes the storage container 101 and the cell stack device 10 stored in the storage container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

Then, the fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

In the module 100 such as that described above, the cell stack device 10 including the plurality of cells 1 having a high durability, as described above, is housed to obtain the high durability module 100.

### Module Housing Device

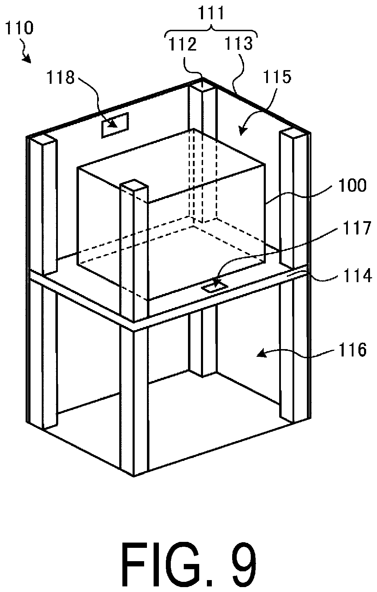

FIG. 9 is an exploded perspective view illustrating an example of a module housing device according to an embodiment. A module housing device 110 according to the present embodiment includes an external case 111, the module 100 illustrated in FIG. 8, and an auxiliary device (not illustrated). The auxiliary device operates the module 100. The module 100 and the auxiliary device are housed in the external case 111. Note that, in FIG. 9, the configuration is partly not illustrated.

The external case 111 of the module housing device 110 illustrated in FIG. 9 includes a support 112 and an external plate 113. A dividing plate 114 vertically partitions the interior of the external case 111. The space above the dividing plate 114 in the external case 111 is a module housing room 115 for housing the module 100. The space below the dividing plate 114 in the external case 111 is an auxiliary device housing room 116 for housing the auxiliary device configured to operate the module 100. Note that, in FIG. 9, the auxiliary device housed in the auxiliary device housing room 116 is not illustrated.

The dividing plate 114 includes an air circulation hole 117 for causing air in the auxiliary device housing room 116 to flow into the module housing room 115 side. The external plate 113 constituting the module housing room 115 includes an exhaust hole 118 for discharging air inside the module housing room 115.

In the module housing device 110, the module housing device 110 having high durability can be obtained by providing the module 100 having high durability in the module housing room 115 as described above.

Note that, in the embodiment described above, the case where the support substrate of the hollow flat plate-shaped is used has been exemplified; however, the embodiment can also be applied to a cell stack device using a cylindrical support substrate.

### Other Embodiments

An electrochemical cell device according to other embodiments will be described.

In the embodiments described above, a so-called "vertically striped type" electrochemical cell stack device, in which only one element portion including the fuel electrode, the solid electrolyte layer, and the air electrode is provided on the surface of the support substrate, has been exemplified. However, the present disclosure can be applied to a horizontally-striped-type electrochemical cell device including an array of so-called "horizontally striped type" electrochemical cells in which a plurality of element portions are provided on the surface of a support substrate at mutually separated locations and adjacent element portions are electrically connected to each other.

In the embodiments described above, the fuel cell, the fuel cell stack device, the fuel cell module, and the fuel cell device have been exemplified as examples of the "electrochemical cell", the "electrochemical cell device", the "module", and the "module housing device". Alternatively, however, an electrolytic cell, an electrolytic cell stack device, an electrolytic module, and an electrolytic device may be provided. The electrolytic cell includes a first electrode layer and a second electrode layer and, by supplying electric power, decomposes water vapor into hydrogen and oxygen or decomposes carbon dioxide into carbon monoxide and oxygen. In each of the embodiments described above, the oxide ion conductor or the hydrogen ion conductor has been exemplified as an example of the electrolyte material of the electrochemical cells, but a hydroxide ion conductor may be used. Such an electrolytic cell, an electrolytic cell stack device, an electrolytic module, and an electrolytic device can increase durability.

In the embodiments described above, the first cell 1A and the second cell 1B are located at both ends of the cell stack 11, and the third cell 1C is located at the center of the cell stack 11, but the configuration is not limited thereto and any cells 1 may be used as the first cell 1A to the third cell 3C as long as the order of the arrangement of the first cell 1A to the third cell 3C is not changed.

While the present disclosure has been described in detail, the present disclosure is not limited to the aforementioned embodiment, and various changes, improvements, and the like can be made without departing from the gist of the present disclosure.

As described above, the electrochemical cell device according to the embodiment includes the cell stack 11, the support body 15, and the fixing member 13. The cell stack 11 includes the plurality of cells 1 each having the pair of main surfaces along the first direction and the second direction intersecting the first direction, and the side surface 1c connecting the pair of main surfaces, the plurality of cells 1 being aligned along the third direction intersecting the first direction and the second direction. The support body 15 supports one end portion of the plurality of cells 1 in the first direction along the third direction. The fixing member 13 is located between the cell stack 11 and the support body 15. The plurality of cells 1 include the first cell 1A located on one end side in the third direction, the second cell 1B located on the other end side in the third direction, and the third cell 1C located between the first cell 1A and the second cell 1B. Each of the side surfaces 1c of the first cell 1A to the third cell 1C includes the contact area 31 that is in contact with the fixing member 13 and the non-contact area 32 that is not in contact with the fixing member 13. The maximum length in the first direction of the contact area 31 in the first cell 1A and/or the second cell 1B is different from the maximum length (length L3) in the first direction of the contact area 31 in the third cell 1C. This increases the durability of the fixing member 13, and thus increases the durability of the electrochemical cell stack device.

The electrochemical cell device according to the embodiment includes the cell stack 11, the support body 15, the fixing member 13, and the electrode terminal. The cell stack 11 includes the plurality of cells 1 each having the pair of main surfaces along the first direction and the second direction intersecting the first direction, and the side surface 1c connecting the pair of main surfaces, the plurality of cells 1 being aligned along the third direction intersecting the first direction and the second direction. The support body 15 supports one end portion of the plurality of cells 1 in the first direction along the third direction. The fixing member 13 is located between the cell stack 11 and the support body 15. The electrode terminal is drawable externally from the cell stack 11. The plurality of cells 1 include the first cell 1A and the second cell 1B located closer to the electrode terminal than the first cell 1A is. The side surfaces 1c of the first cell 1A and the second cell 1B each include the contact area 31 that is in contact with the fixing member 13 and the non-contact area 32 that is not in contact with the fixing member 13. The maximum length (length L2) in the first direction of the contact area 31 in the second cell 1B is greater than the maximum length (length L1) in the first direction of the contact area 31 in the first cell 1A. This increases the durability of the fixing member 13, and thus increases the durability of the electrochemical cell stack device.

The electrochemical cell device according to the embodiment includes the cell stack 11, the support body 15, the fixing member 13, and the electrode terminal. The cell stack 11 includes the plurality of cells 1 each having the pair of main surfaces along the first direction and the second direction intersecting the first direction, and the side surface 1c connecting the pair of main surfaces, the plurality of cells 1 being aligned along the third direction intersecting the first direction and the second direction, and the end current collection member 17 located at the end portion in the third direction. The support body 15 supports one end portion in the first direction of the plurality of cells 1 and the end current collection member 17 (17A, 17C) along the third direction. The fixing member 13 is located between the plurality of cells 1 and the end current collection member 17 (17A, 17C), and the support body 15. The electrode terminal is drawable externally from the cell stack 11. The plurality of cells 1 include the first cell 1A. The end current collection member 17 (17A, 17C) includes the first surface 17a and the second surface 17b located on the opposite side of the first surface 17a and facing the first cell 1A. The side surface 1c of the first cell 1A and the first surface 17a of the end current collection member 17 (17A, 17C) each have the contact area that is in contact with the fixing member 13 and the non-contact area that is not in contact with the fixing member 13. The third length (length L3) which is the maximum length in the first direction of the contact area in the end current collection member 17 (17A, 17C) is greater than the first length (length L1) which is the maximum length in the first direction of the contact area in the first cell 1A. This increases the durability of the fixing member 13, and thus increases the durability of the electrochemical cell stack device.

The module 100 according to the embodiment includes the electrochemical cell device described above, and the storage container 101 housing the electrochemical cell device. Thus, the module 100 having high durability can be obtained.

The module housing device 110 according to the embodiment includes the module 100 described above, the auxiliary device configured to operate the module 100, and the external case housing the module 100 and the auxiliary device. Thus, the module housing device 110 having a high durability can be obtained.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1 Cell
3 Element portion
5 Fuel electrode
6 Solid electrolyte layer
7 Intermediate layer
8 Air electrode
10 Cell stack device
11 Cell stack
12 Fixing member
13 Fixing member
14 Support member
15 Support body
16 Gas tank
17 End current collection member
18 Electrically conductive member
100 Module
110 Module housing device

## Claims

1. An electrochemical cell device, comprising:
a cell stack comprising a plurality of cells, each of the plurality of cells comprising:
a pair of main surfaces along a first direction and a second direction intersecting the first direction; and
a side surface connecting the pair of main surfaces,
the plurality of cells being aligned along a third direction intersecting the first direction and the second direction;
a support body supporting one end portion of the plurality of cells in the first direction along the third direction; and
a fixing member located between the cell stack and the support body, wherein
the plurality of cells comprise:
a first cell located on one end side in the third direction,
a second cell located on the other end side in the third direction, and
a third cell located between the first cell and the second cell,
the side surfaces of each of the first cell, the second cell and the third cell comprises:
a contact area in contact with the fixing member; and
a non-contact area in no contact with the fixing member, and
a maximum length in the first direction of the contact area of the first cell and/or the second cell is different from a maximum length in the first direction of the contact area of the third cell.

2. The electrochemical cell device according to claim 1, wherein
the maximum length in the first direction of the contact area of the first cell and/or the second cell is greater than the maximum length in the first direction of the contact area of the third cell.

3. The electrochemical cell device according to claim 1, wherein
the maximum length in the first direction of the contact area of the third cell is greater than the maximum length in the first direction of the contact area of the first cell and/or the second cell.

4. An electrochemical cell device, comprising:
a cell stack comprising a plurality of cells, each of the plurality of cells comprising:
a pair of main surfaces along a first direction and a second direction intersecting the first direction, and
a side surface connecting the pair of main surfaces,
the plurality of cells being aligned along a third direction intersecting the first direction and the second direction;
a support body supporting one end portion of each of the plurality of cells in the first direction along the third direction;
a fixing member located between the cell stack and the support body; and
an electrode terminal drawable externally from the cell stack, wherein
the plurality of cells comprise a first cell and a second cell,
the second cell is located closer to the electrode terminal than the first cell is,
the side surfaces of each of the first cell and the second cell comprises:
a contact area in contact with the fixing member; and
a non-contact area in no contact with the fixing member, and
a second length which is a maximum length in the first direction of the contact area in the second cell is greater than a maximum length in the first direction of the contact area in the first cell.

5. The electrochemical cell device according to claim 4, wherein
the second cell is coupled to the electrode terminal.

6. The electrochemical cell device according to claim 4 or 5, further comprising:
an end current collection member located between the electrode terminal and the second cell, and being in contact with the fixing member, wherein
a third length which is defined as a maximum length in the first direction of a contact area in which the end current collection member is in contact with the fixing member, and
the third length is greater than the second length.

7. The electrochemical cell device according to claim 4 or 5, further comprising:
an end current collection member located on the electrode terminal side, and comprising:
a first surface along the first direction and the second direction,
a second surface facing the second cell; and
a third surface connecting the first surface and the second surface,
the end current collection member in contact with the fixing member, wherein
an average length in the first direction of an area in which the first surface, the second surface, and the third surface are in contact with the fixing member is greater than an average length in the first direction of an area in which the pair of main surfaces and the side surface of the second cell are in contact with the fixing member.

8. An electrochemical cell device, comprising:
a cell stack comprising a plurality of cells,
each of the plurality of cells comprising:
a pair of main surfaces along a first direction and a second direction intersecting the first direction, and
a side surface connecting the pair of main surfaces,
the plurality of cells being aligned along a third direction intersecting the first direction and the second direction,
the cell stack further comprising an end current collection member located at an end portion in the third direction;
a support body supporting one end portion of each of the plurality of cells and the end current collection member in the first direction along the third direction;
a fixing member located between the plurality of cells and the end current collection member, and the support body; and
an electrode terminal drawable externally from the cell stack, wherein
the plurality of cells comprise a first cell,
the end current collection member comprises a first surface and a second surface located opposite to the first surface and facing the first cell,
each of the side surface of the first cell and the first surface of the end current collection member comprises:
a contact area in contact with the fixing member; and
a non-contact area in no contact with the fixing member, and
a third length defined as a maximum length in the first direction of the contact area in the end current collection member is greater than a first length defined as a maximum length in the first direction of the contact area in the first cell.

9. A module comprising:
the electrochemical cell device according to any one of claims 1 to 8; and
a container housing the electrochemical cell device.

10. A module housing device comprising:
the module according to claim 9;
an auxiliary device configured to operate the module; and
an external case housing the module and the auxiliary device.
